# EUROPEAN PATENT APPLICATION

(11) **EP 1 744 544 A1**
(43) Date of publication of application: **17.01.2007**
(21) Application number: 05300586.4
(22) Date of filing: 13.07.2005
(51) Int. Cl.: H04N 5/225

(54) **Camera assembly**

(71) Applicant: Thomson Licensing, 92100 Boulogne-Billancourt (FR)
(72) Inventor: Boneschanscher, Machiel, 5111 VT, Baarle-Nassau (NL); Moerdijk, Victor, 5627 JW, Eindhoven (NL); Dam, Jeffrey, 4701 EA, Roosendaal (NL)
(74) Representative: Arnold, Klaus-Peter

(57) **Abstract**

A camera assembly comprises a camera support (100) and a camera body (104), the camera support (100) comprising two orthogonal branches (101, 4), a first (4) of which is adapted to support a lens (102), and a second (101) of which has locking means for releasably locking said camera body (104) to the second branch (101). The second branch (101) has an immobile member (103) with respect to the first branch (4) and a displaceable member (1), said first locking means are formed in said displaceable member (1) which is displaceable between a first position in which said camera body (104), when locked to the displaceable member (1) by said first locking means, is spaced from the lens (102), and a second position in which the camera body (104) connects to the lens (102).

## Description

The present invention relates to a camera assembly, in particular a television camera assembly, comprising a support for a camera body and for a lens which, when properly assembled, co-operates with the camera body to project an image onto a recording surface of the camera body.

A prior art support of this type, known as a super-expander, comprises two orthogonal branches, a first one of which extends perpendicular to an optical axis of a lens mounted to it, and the second of which extends at a side of the first branch opposite to the side at which the lens is mounted and to which the camera body is releasably locked.

The locking means comprise a groove formed at the upper side of the second branch which has a swallow-tail cross section and which is tapered towards the first branch, and a wedge formed at a front portion of the bottom side of the camera body which is adapted to engage the groove and to slide in the groove towards the first branch until it reaches an abutment position in which sidewalls of the wedge and of the groove come into contact. In this abutment position, the front portion of the camera is connected without play to the second branch.

The locking means further comprise a flat-headed pin projecting from an upper side of the second branch and two webs formed opposite to each other in a rear portion of the bottom side of the camera body, which engage between said upper side and the head of said pin, whereby the rear portion of the camera body is connected to the second branch with a certain play.

When the camera body is in the abutment position, a bayonet connection between the camera boy and the lens must be locked in order to make the camera assembly operable. In order for the bayonet connection to operate properly, the abutment position must be defined with respect to the lens with a high degree of accuracy. This high accuracy is difficult to achieve, since positioning tolerances may exist between the camera body and the wedge and between the swallow-tail groove and the first branch of the support, and the widths of the wedge and the groove may scatter.

Further, there is a risk of damaging the lens if the camera body is pushed towards the abutment position without being properly oriented with respect to the optical axis.

It is an object of the present invention to provide a camera assembly which allows to lock the camera body to the support in a well-defined position and to connect the camera body to the lens without having to impose too strict tolerances on placing and dimensions of the various components that co-operate in the connection between camera body and lens.

Another object is to provide by a camera assembly in which there is no risk of damaging the lens when the camera body is approached to it.

These objects are achieved by a camera assembly comprising a camera support and a camera body, the camera support comprising two orthogonal branches, a first of which is adapted to support a lens, and a second of which has first locking means for releasably locking said camera body to the second branch, in which said second branch has an immobile member with respect to the first branch and a displaceable member which is displaceable with respect to the immobile member along a predefined trajectory, said first locking means are formed in said displaceable member which is displaceable between a first position in which said camera body, when locked to the displaceable member by said first locking means, is spaced from the lens, and a second position in which the camera body connects to the lens.

Since in this camera assembly, the camera body is locked to the support while the displaceable member is in its first position, there is no risk of contact between the camera body and a lens which may be mounted to the first branch, even if the camera is pushed violently towards its abutment position without being properly oriented. There is no risk that the abutment position cannot be reached because due to manufacturing tolerances the camera body hits the first branch before, or that the bayonet connection is difficult to close because the camera body in the abutment position is too far apart from the first branch.

As a first safety measure, it can be provided that the displaceable member is displaceable into the second position only if the locking means is in a locking configuration. Thus the camera body can approach the lens only if its orientation is correct, and there is no risk of a contact between the camera body and an optical surface of the lens.

This first safety measure may in particular be embodied by an operating member of said locking means which is displaceable perpendicular to the displacement direction of said displaceable member and which may be displaced by a user for locking and/or unlocking the camera body, and by said immobile member having a projection which blocks the operating member in its locking configuration when the displaceable member is in the second position.

As a second safety measure, it can be provided that the locking means is locked in the locking configuration when the displaceable member is in the second position. I.e. the camera body cannot be unlocked from the displaceable member while it is so close to the lens that an accidental movement of the camera body might damage the lens.

This first safety measure may in particular be embodied by an operating member of said locking means which is displaceable perpendicular to the displacement direction of said displaceable member and which may be displaced by a user for locking and/or unlocking the camera body, and by said immobile member having a projection which blocks the displaceable member in its first position when the locking means is in a non-locking configuration.

It is particularly preferred that both safety measures be implemented, and that the operating member and the projection of the two safety measures be the same. This may be achieved e.g. by providing the operating member with a first blocking surface which extends substantially perpendicular to the displacement direction of the displaceable member, which faces a first side of the projection of the immobile member while in the non-locking configuration and which does not overlap said first blocking surface when the operating member is in the locking configuration, and with a second blocking surface which is substantially perpendicular to the direction of displacement of said operating member between its locking and non-locking configurations, and which overlaps with a second side of said projection only if the displaceable member is in its second position.

The camera body and the displaceable member should preferably have co-operating guide means for guiding the camera body into a position in which the locking means are capable of locking the camera body to the displaceable member. These co-operating guide means may comprise a tapered wedge and a mating tapered swallow-tail groove, one of which is located at the camera body and the other of which is located at the displaceable member, e.g. as described above. In addition or as an alternative, co-operating webs and grooves of constant width may be provided at the displaceable member and at the camera body, for strictly guiding a linear displacement of the camera body with respect to the support.

The guide means may guide the camera body into its locking position in parallel to the displacement direction of the displaceable member; since according to the above safety measures the displaceable member is blocked while in the non-locking configuration, there is no risk of the camera body hitting the lens without being properly locked, and, hence, properly oriented.

The displaceable member may be displaceable into a third position in which it farther away from the first branch than in the first and second positions, and in which it is unlocked from the immobile member. In this position, it is possible to remove the displaceable member from the support, e.g. for repair or maintenance purposes.

Second locking means may be provided for automatically and releasably locking the displaceable member to the immobile member when the displaceable member is displaced from its first position to its second position, thus preventing the camera body from coming closer to the lens than necessary for connecting the two.

Further features and advantages of the invention will become apparent from the following description of embodiments thereof. The description refers to drawings in which
- Fig. 1: is a schematic side view of a camera assembly according to the present invention;
- Fig. 2: is a perspective view of a displaceable member of the camera assembly according to the invention and of complementary engaging means of the camera for cooperating with the engaging means of the displaceable member;
- Fig. 3: is a horizontal section of the displaceable member of Fig. 2 along line III-III of Fig. 4;
- Fig. 4: is a cross section of the displaceable member taken along line IV-IV of Fig. 3;
- Fig. 5: is a horizontal section of the displaceable member in unlocked configuration along line V-V of Fig. 6; and
- Fig. 6: is a cross section along line VI-VI of Fig. 5;
- Fig. 7: is a bottom view of the displaceable member;
- Figs. 8 to 14: show steps of a mounting procedure of the camera assembly; and
- Fig. 15: is a perspective view, analogous to Fig. 2, of a camera support according to a second embodiment of the invention.

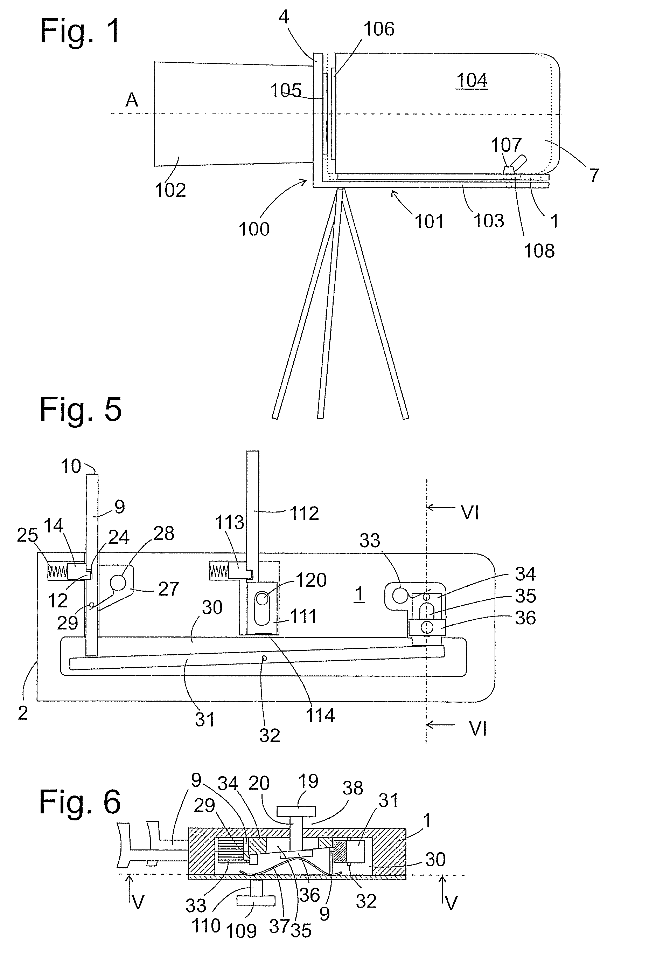

In the side view of the camera assembly of Fig. 1, reference numeral 100 denotes a camera support having a first, substantially vertical branch 4 and a second, substantially horizontal branch 101. The vertical branch 4 extends perpendicular to the optical axis A of a lens 102 which is mounted to an outer side of branch 4. The horizontal branch 101 comprises a first generally plate-shaped member 103 which is rigidly connected to the vertical branch 4 and is provided with a fixture for fixing it to a tripod or the like, and which is therefore referred to as an immobile member, and a second generally plate-shaped member 1 on which a camera body 104 is mounted. In a first position of the camera body 104 and the second plate-shaped member 1 represented by solid lines in Fig. 1, there is a space between the camera body 104 and the vertical branch 4, and bayonet coupling members 105 and 106 of lens 102 and camera body 104 do not engage. The second plate-shaped member 1 is displaceable into a second position, shown in phantom in Fig. 1, in which coupling members 105 and 106 engage each other and can be locked by rotating one of them, rendering the camera operable. Since the bayonet coupling members 105 and 106 as such are part of the prior art, they are not described in further detail here.

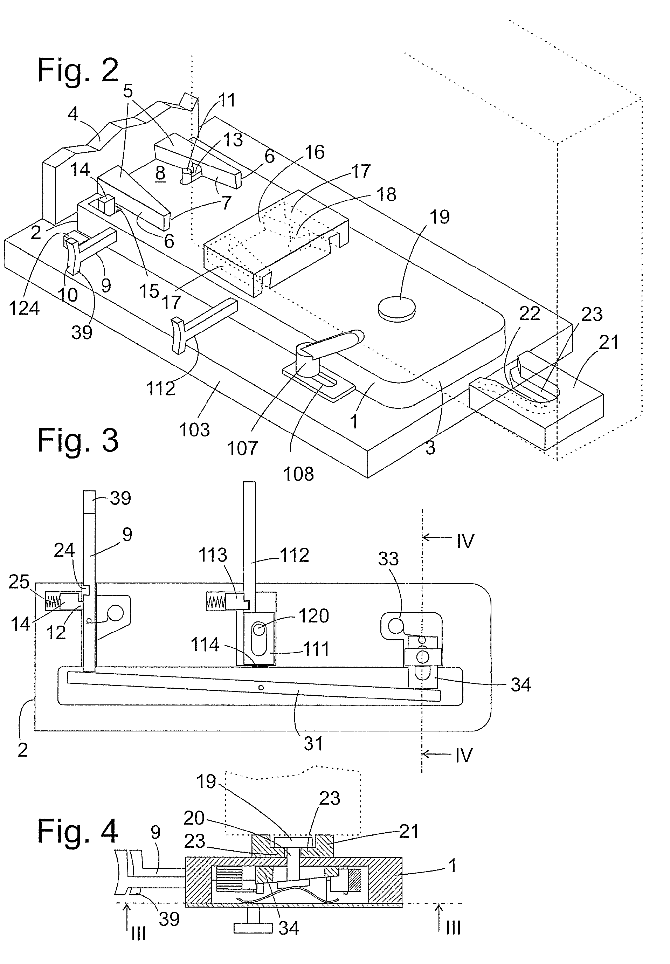

In order to facilitate an understanding of the camera assembly and its operation, to begin with, the second plate-shaped member 1 and its connection to the camera body 104 will now be explained in detail referring to Figs 2 to 6.

As shown in Fig. 2, the displaceable member 1 is a flat slab made of aluminum or the like, a front end 2 of which faces the vertical branch 4. Near the front end 2, two wedges 5 are formed on the displaceable member 1. The wedges 5 have vertical outer sides 6 extending in a longitudinal direction of the displaceable member 1 and inner sides 7 which face each other and converge in upward and frontward directions, so as to define a wide tapered groove 8 having a swallow-tail cross section.

Underneath the wedges 5, a latch 9 is slideably received in a transversal slot of the displaceable member 1. At a remote end of the latch 9, a head is formed which has a concave surface 10, which is easily pressed with a finger, in order to push the latch 9 into the displaceable member 1. The head further has a downward-projecting portion 39, which co-operates with a projection 124 of immobile member 103 in a way which will become apparent later in the description. The latch 9 is connected to a cylindrical pin 11 which protrudes through an elongated hole 13 at the bottom of tapered groove 8. The elongated hole 13 extends into one of the wedges 5, so that when the latch 9 is pressed, the pin 11 moves out of the groove 8 and disappears in the opening of the wedge.

Adjacent to the outer side 6 of one of the wedges 5, a trigger pawl 14 is mounted in a hole 15 of the displaceable member 1. The trigger pawl 14 is displaceable in the longitudinal direction of the displaceable member 1.

Near the centre of the displaceable member 1, a cuboid block 16 is shown, which forms engaging means of the camera body 104. The camera body 104 is shown in phantom in Fig. 2 in order to illustrate its position with respect to the block 16. At the bottom side of the block 16, two tapered grooves 17 are formed, the shape of which matches the wedges 5 of the displaceable member 1. Since the grooves 17 have wide openings at the side of the block 16 which faces the wedges 5, it is easy to make the wedges 5 engage the grooves 17 when the camera body 104 is pushed towards the wall 4 in order to prepare for coupling it to the lens 102. The camera body 104 can be pushed forward until an abutment position is reached in which the inner sides of the groove 17 touch the inner sides 7 of the wedges 5. When this happens, a notch 18 formed in an inner side of one of the grooves 17 is aligned with the elongated hole 13, so that pin 11 can engage it and come into contact with a front wall of the notch 18, thereby preventing a rearward movement of the block 16. The block 16 is thus locked to the displaceable member 1 without any play.

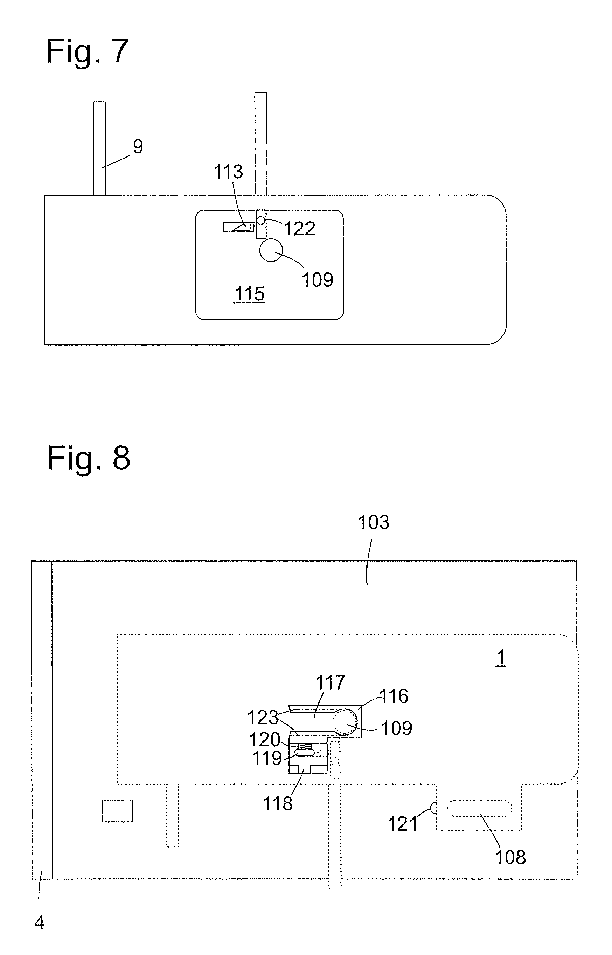

Near the rear end 3 of the displaceable member 1, a circular locking plate 19 is held spaced from the upper side of the baseplate 1 by a cylindrical stem 20 (see e. g. Fig. 6) which, in the view of Fig. 2, is concealed completely below the locking plate 19.

The camera body 104 has a shoe plate 21 fixed to its rear bottom portion, in which an undercut groove 22 is formed. In its upper portion, the groove 22 is wide enough to receive the locking plate 19, whereas in a lower portion thereof, webs 23 protrude from the sides of the groove towards the centre in order to engage between the locking plate 19 and the surface of the displaceable member 1 at both sides of the stem 20.

In the configuration of the displaceable member 1shown in Fig. 2, the camera body 104 would be locked to the displaceable member 1, if it was appropriately placed with its block 16 engaging the groove 8, the pin 11 engaging the notch 18 and the locking plate 19 engaging the groove 22 of shoe plate 21.

In order to understand the process of locking the camera body to the displaceable member 1, reference will now be made to Fig. 4 and 5, which show a bottom view of the displaceable member 1 and a cross section of it in a non-locking configuration. In this configuration, the latch 9 is pressed into the displaceable member 1, so that pin 11 is hidden within the wedge 5 . A cog 12, which is part of trigger pawl 14, engages a notch 24 of latch 9. The cog 12 is held pressed into the notch 24 by a compressed helical spring 25. Another helical spring 26 is mounted in a cutout 27 and is under a torsion load, so that an end branch 28 of spring 26 applies a force to a catch 29 of latch 9 which tends to push latch 9 out of the baseplate 1. The latch 9, being blocked by cog 12, cannot yield to this force.

In a longitudinal cutout 30 of the displaceable member 1, a two-armed lever 31 is rotatably held on a shaft 32. A wedge 34 is pressed against one end of the lever 31 by a third helical spring 33, whereby the other end of the lever 31 is pressed against the inner end of latch 9. The wedge 34 has a longitudinal slot 35 formed in it, through which the stem 20 extends. A pressing plate 36 extending across the wedge 34 is fixed to an end of the stem 20. A leaf spring 37, which is not shown in Fig. 5 for the sake of clarity, but in Fig. 6 only, urges the plate 36 against the wedge 34, so that the wedge 34 is held without play between the plate 36 and an inner surface of displaceable member 1. In the configuration of Fig. 6, the space 38 between the upper surface of displaceable member 1 and the bottom side of locking plate 19 is wide enough for the webs 23 of shoe plate 21 to engage in it easily.

In the process of pushing the camera body 104 forward from the position shown in Fig. 2 to the position in which it is to be locked to the displaceable member 1, the block 16 hits trigger pawl 14 and pushes it towards front end 2, whereby spring 25 is compressed and cog 12 is removed from notch 24. Now, the latch 9 can yield to the force of spring 26 and move outward. The lever 31 is now free to rotate about shaft 32, so that it yields to the pressure of the wedge 34, the wedge 34 is moved downward in the perspective of Fig. 5 or to the right in the perspective of Fig. 6, thus pulling locking plate 19 towards displaceable member 1.

The resulting configuration can be seen in Fig. 3 and 4.

The wedge 34 yields to the force of spring 33, until the locking plate 19 is drawn so close to the displaceable member 1 that the webs 23 of shoe plate 21 are clamped between displaceable member 1 and locking plate 19. Since the slope of the wedge 34 is small - the thickness difference between its thick and narrow ends may be less than 0.5 mm, whereas the distance between its two positions in the configurations of Fig. 3 and 5 may be several millimetres - the wedge 34 cannot slide sideways if a pulling force is applied to the locking plate 19, so that the shoe plate 21 is held firmly and without play.

In order to release the camera body again, it is sufficient to press the latch 9 into the displaceable member 1, so that pin 11 moves out of groove 8 and into its wedge 5, and the wedge 34 is pushed back by lever 31, allowing the locking plate 19 to be raised by leaf spring 37. The camera body 104 is thus unlocked and can be drawn backwards. Due to the cog 12 being pressed into notch 24 by spring 25, the latch 9 is held in this position until another camera body is mounted and presses trigger pawl 14 forward again.

Referring to Fig. 2 again, the displaceable member 1 is connected to the immobile member 103 by means of a screw 107 which extends through an elongated hole 108 of displaceable member 1 and engages a threaded bore of immobile member 103.

Other connecting means for connecting and locking the displaceable member 1 to immobile member 103, as shown e.g. in Fig. 6, comprise a locking plate 109 similar to locking plate 19 but held spaced from the bottom side of displaceable member 1 by a stem 110. Similar to stem 20, stem 110 extends through a hole of a wedge 111. The wedge is connected to a latch 112 which extends out of the displaceable member 1. In the configuration of Figs 3 and 5, the latch 112 is locked in position by a spring-loaded pawl 113 which engages a notch of latch 112 and thus prevents a spring 114 from expanding and pushing the latch 112 outwards.

The bottom view of displaceable member 1 in Fig. 7 shows a shallow recess 115 formed in the bottom side of the displaceable member 1. A trigger portion of pawl 113 extends through an opening at the bottom of the recess 115. By displacing the trigger portion to the left in Fig. 7, the pawl 113 is disengaged from the notch of latch 112; the latch 112 is thrust outward, and the locking plate 109 is drawn towards the bottom side of displaceable member by wedge 111.

A locking pin 122 connected to latch 112 protrudes into recess 115 through a slot which extends in the direction of displacement of latch 112.

Referring to Figs 8 to 14, the assembling procedure of the camera assembly is explained.

Fig. 8 is a top view of the immobile member 103 with the outline of displaceable member 1 shown in phantom. A shoe plate 116 similar to shoe plate 21 of the camera body is fixed to the upper side of immobile member 103. The displaceable member 1 is lying loosely on top of the immobile member 103, and the locking plate 109 of displaceable member 1 is inserted from above into a circular cutout at an end of a groove 117 of shoe plate 116. Undercuts 123 of groove 117 are represented by dash-dot-lines. At a side of shoe plate 116, there is a T-shaped groove 118 from the bottom of which a displaceable block 119 projects upward. The block is urged to a side of immobile member 103 by a compression spring 120. In the configuration of Fig. 8, the screw 107 is removed, and elongated hole 108 does not coincide with the threaded bore 121 of immobile member which the screw 107 is to engage. The camera body is not yet connected to the displaceable member 1. The configuration of Fig. 8 is a service configuration in which the displaceable member 1 can be freely placed on or removed from immobile member 103.

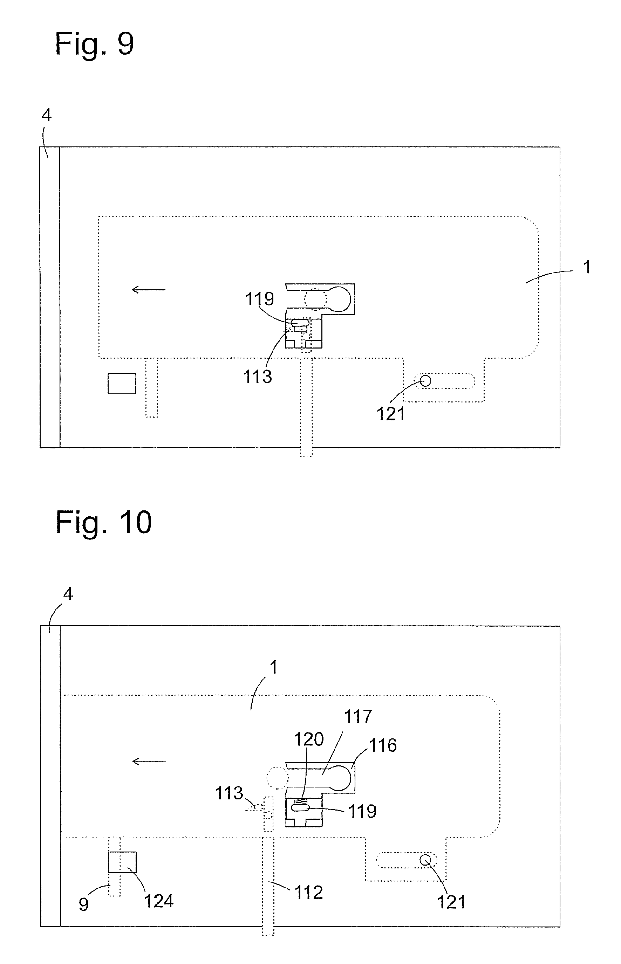

After placing the displaceable member 1 on immobile member 103 in the configuration of Fig. 8, displaceable member 1 is pushed towards the vertical member 4. As can be seen in Fig. 9, the block 119 is displaced against the force of spring 120 by sliding along a tapered side of the trigger portion of pawl 113. The pawl 113 is not displaced by block 119.

When the displaceable member 1 is pushed still closer to the vertical member 4, as shown in Fig. 10, the block 119 passes pawl 113, and the spring 120 expands again. The locking plate has now reached the other end of groove 117.

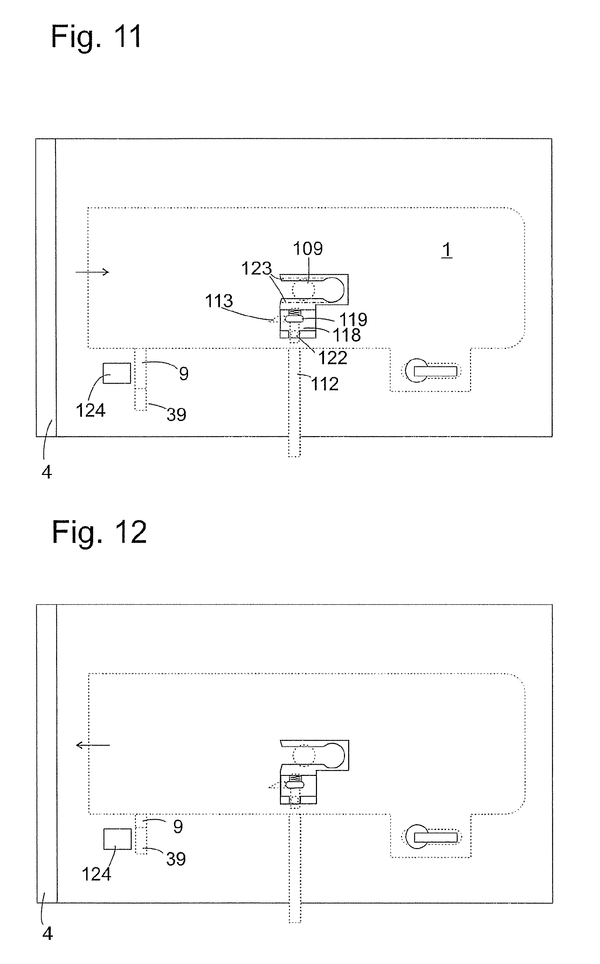

When the displaceable member 1 is drawn away from the vertical member 4 again, block 119 collides with pawl 113 and displaces it, as shown in Fig. 11. This releases latch 112, which is pushed outward. By the action of latch 112 and wedge 111, the locking plate 109 is pulled upward and is pressed against the undercuts 123. Simultaneously, locking pin 122 of latch 112 engages a side branch of T-groove 118, whereby the displaceable member 1 is locked to immobile member 103. In this configuration, the elongated hole 108 coincides with threaded bore 121, and the screw 107 can be inserted, so that displaceable and immobile members cannot separate any more. When the screw 107 is in place, the displaceable member cannot return to the position shown in Fig. 8.

In order to prepare the displaceable member 1 for receiving the camer body 104, in the next step, the latch 9 is pressed into the displaceable member 1, whereby, as explained above, pin 11 is moved out of swallow-tail groove 8, thus clearing the groove 8 for engaging the cuboid block 16 of camera body 104. As shown in Fig. 12, when the latch 9 is pressed in, its downward-projecting portion 39 would abut against projection 124 if the displaceable member 1 was pushed forward. I. e. when the displaceable member 1 is ready for receiving the camera body 104, it cannot be pushed close to the vertical member 4, and an accidental collision of the camera body 104 and the lens 102 is prevented.

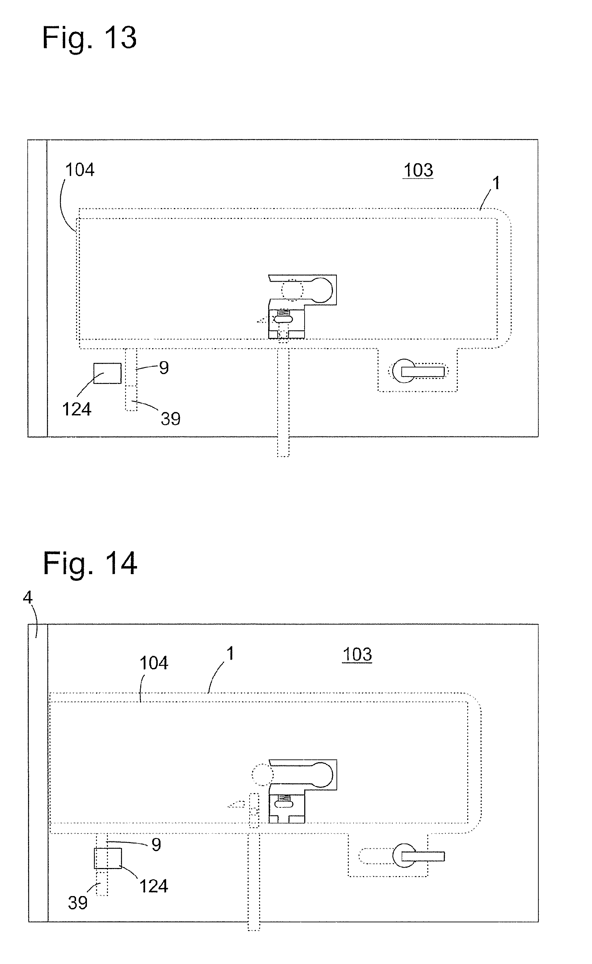

When the camera body 104 is properly locked to the displaceable member 1, as shown in Fig. 13, the latch 9 comes out of the displaceable member 1 again, and the camera assembly is in the first position described above with respect to Fig. 1. The latch 9 does not interfere with projection 124 any more now, but the displaceable member 1 is still locked to the immobile member 103. In this first position, the camera body 104 and the camera support 100 can conveniently be handled as a unit; e.g. they may be removed from a tripod and placed in a storage box together for transport. In this first position, it is further possible to remove the lens 102 from vertical branch 4 without having to fear interference between the lens 102 and the camera body 104 which might damage one or the other.

By pressing inward the latch 112, displaceable member 1 is unlocked from immobile member 103, so that the displaceable member 1 and the camera body 104 supported by it can be pushed forward into the position of Fig. 14, in which the camera body 104 is close enough to the lens 102 for the bayonet coupling 105, 106 to be locked. This is the second position mentioned above with respect to Fig. 1. In the configuration of Fig. 14, the projection 124 is below the latch 9, so that the latch 9 cannot be pushed inwards. Thus, it is impossible to unlock the camera body 104 from the displaceable member 1 while the camera body is so close to the lens that an uncontrolled movement of the camera body might cause damage to the lens.

In order to remove the camera body, the stages shown in Figs 12 to 14 are gone through in reverse order, i. e. the displaceable member 1 and the camera body 104 are pulled away from vertical member 4 until block 119 triggers pawl 113, the latch 112 is pushed outward and locking plate 109 is pulled upward, clamping shoe plate 116. Then latch 9 is pressed, whereby the camera body 104, now in a safe distance from lens 102, is pushed out of its locking position and can be removed.

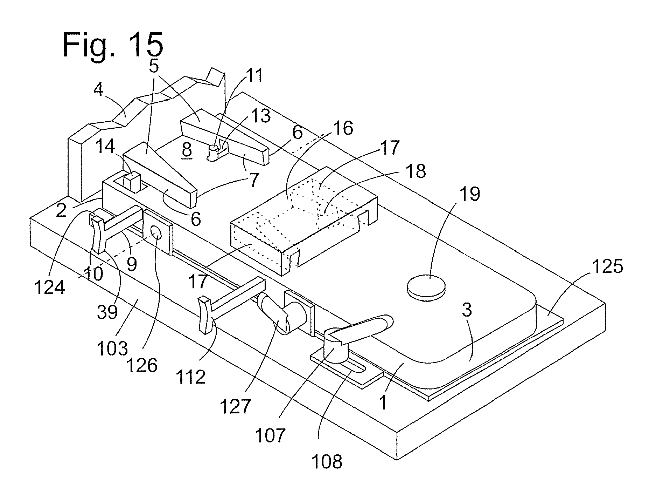

Fig. 15 is a perspective view, analogous to Fig. 2, of a camera support according to a second embodiment of the invention. Components of this embodiment which correspond to those of the embodiment of Fig. 2 have identical reference numerals.

The embodiment of Fig. 15 differs from that of Fig. 2 in that the displaceable member 1 does not rest directly on immobile member 103, but there is a plate 125 between the two. Plate 125 rests directly on immobile member 103 and is connected to displaceable member 1 by a shaft 126, allowing the displaceable member 1 to be tilted by a few degrees with respect to the immobile member 103. The plate 125 has a central opening, not shown in the Fig, through which stem 110 extends, allowing the assembly formed of displaceable member 1 and plate 125 to be mounted on immobile member 103 just as described above referring to Figs 8 to 14.

A spring is concealed between plate 125 and displaceable member 1 for urging the rear portion of displaceable member 1 upward, compensating the weight of the camera body, so that the tilt of the camera body can be changed with little effort.

A second screw 127 similar to screw 107 is provided for locking the displaceable member 1 with respect to the plate 125 at a desired tilt angle. When the bayonet coupling members 105, 106 are brought into engagement and are locked to each other, the screw 127 may be unlocked, allowing the camera body to yield to any torque that might occur between the bayonet coupling members 105, 106 during locking, so that once the screw 127 is locked again, the assembly is free from internal stress.

## Claims

1. A camera assembly comprising a camera support (100) and a camera body (104), the camera support (100) comprising two orthogonal branches (101, 4), a first (4) of which is adapted to support a lens (102), and a second (101) of which has first locking means (5, 11, 19, 20) for releasably locking said camera body (104) to the second branch (101), **characterised in that** said second branch (101) has an immobile member (103) with respect to the first branch (4) and a displaceable member (1), said first locking means (5, 11, 19, 20) are formed in said displaceable member (1) which is displaceable between a first position in which said camera body (104), when locked to the displaceable member (1) by said first locking means (5, 11, 19, 20), is spaced from the lens (102), and a second position in which the camera body (104) connects to the lens (102).

2. The camera assembly of claim 1, wherein the displaceable member (1) is displaceable into the second position only if the locking means (5, 11, 19, 20) is in a locking configuration.

3. The camera assembly of claim 2, wherein an operating member (9) of said locking means (5, 11, 19, 20) is displaceable perpendicular to the displacement direction of said displaceable member (1), and wherein the immobile member (1) has a projection (124) which blocks the operating member (9) in its locking configuration when the displaceable member (1) is in the second position.

4. The camera assembly of any of claims 1 to 3, wherein the locking means (5, 11, 19, 20) is locked in the locking configuration when the displaceable member (1) is in the second position.

5. The camera assembly of claim 4, wherein an operating member (9) of said locking means (5, 11, 19, 20) is displaceable perpendicular to the displacement direction of said displaceable member (1), and wherein the immobile member (103) has a projection (124) which blocks the displaceable member (1) in its first position when the locking means (5, 11, 19, 20) is in a non-locking configuration.

6. The camera assembly of one of the preceding claims, wherein the displaceable member (1) and the camera body (104) have co-operating guide means (5, 19; 17, 22) for guiding the camera body (104) into a position in which the locking means are capable of locking the camera body (104) to the displaceable member (1).

7. The camera assembly of claim 6, wherein the guide means (5, 19; 17, 22) are adapted to guide the camera body (104) in the displacement direction of the displaceable member (1).

8. The camera assembly of one of the preceding claims, wherein the displaceable member (1) is displaceable into a third position in which it is farther away from the first branch (4) than in the first and second positions, and in which it is unlocked from the immobile member (103).

9. The camera assembly of one of the preceding claims, wherein second locking means (109-116) are provided for automatically and releasably locking the displaceable member (1) to the immobile member (103) when the displaceable member (103) is displaced from its first position to its second position.

10. The camera assembly of claim 9, wherein said second locking means comprises an undercut groove (117) formed in one of said members (103), a locking plate (119) which engages said undercut groove (117) and means (111) for pulling the locking plate(119) towards the other member (1).

11. The camera assembly of one of the preceding claims, wherein the displaceable member (1) is free to tilt with respect to the immobile member (103).
